# EUROPEAN PATENT APPLICATION

(11) **EP 3 788 876 A1**
(43) Date of publication of application: **10.03.2021**
(21) Application number: 19196032.7
(22) Date of filing: 06.09.2019
(51) Int. Cl.: A01N 37/30, A01P 21/00

(54) **PLANT GROWTH REGULATOR SYSTEM**

(71) Applicant: Fine Agrochemicals Limited, Worcester WR5 2RQ (GB)
(72) Inventor: The designation of the inventor has not yet been filed
(74) Representative: Hoyng Rokh Monegier B.V.

(57) **Abstract**

A spray tank composition is provided comprising daminozide and a pH buffer, wherein the pH of the composition is higher than 6, preferably about 6.5 or more, and preferably lower than 8. Further provided are a concentrated composition comprising daminozide and a pH buffer, a method for treating plants and a kit-of-parts. The invention provides compositions having low UDMH concentrations.

## Description

### Field of the invention

This application concerns spray tank mixtures comprising a plant growth regulator for use on ornamental crops and plant growth regulator concentrate compositions for preparing such spray tank mixtures.

### Background of the invention

Daminozide (succinic acid 2,2-dimethyl hydrazide, CAS Registry Number 1596-84-5) is a commonly used agricultural and horticultural active. It is used as a plant growth regulator. It is used for example as a growth retardant on ornamental crops in greenhouses. Daminozide has a fairly short residual effect, which can be desirable for farmers wishing to only temporarily stunt growth. Daminozide is known to readily biodegrade, showing no daminozide in water/sediment systems after 6 days, which makes it a good agricultural active compound for use in horticulture.

1,1-dimethylhydrazine, UDMH, is a precursor to daminozide and a known carcinogen. Daminozide compositions generally contain UDMH as an impurity, resulting in unsafe conditions for workers in the agricultural sector who handle daminozide. UDMH is known to be able to form in daminozide solutions, especially when heated.

The guidelines currently suggest that a level of 30 ppm by weight of UDMH in daminozide would be safe for use by agrarian workers, however lower levels would be more desirable. Currently, health and safety requirements mean that workers should wear protective clothing for the first 24 hours after application. By limiting the concentration of UDMH, this interval can be shortened, and workers' health better protected.

It is therefore an object of the invention to provide a plant growth regulating composition comprising daminozide, further containing low UDMH, or other impurity levels.

Tank spraying is a well-known and preferred method of applying plant growth regulators such as daminozide to plants. The active substance composition is mixed into a tank with water, which is then sprayed over the fields. During this tank mixing, the daminozide, provided in liquid or solid compositions, is diluted and more susceptible to hydrolysis thereafter.

In JP2011/251913, a method of storing daminozide is suggested. It is aimed at a liquid composition having a pH of 6.5 to 9.5, comprising further a pH adjuster in the range of 0.1 to 1.0 wt%. This storing method is aimed at providing a stable composition for up to two years, wherein the concentration of daminozide remains at effective levels. This does not however address the problem of the spray tank composition having a very low but hazardous levels of contaminants. The reference does not mention the effects of these contaminants, nor the concentration in the solutions described in said reference. It is thus unclear if these compositions are safe to handle, as negligible differences in the concentration of daminozide can result in unsafe amounts of UDMH.

### Summary of the invention

One object of the invention is to provide spray tank solutions of effective amounts of daminozide, showing very low amounts of UDMH after 24 hours.

Another object of the invention is to provide concentrated daminozide compositions to achieve suitable spray tank solutions, and methods for preparing these.

A spray tank solution of the invention comprises daminozide, preferably in concentrations shown suitable for plants such as 1 - 6 g/1, although concentrations up to 18 g/L are allowed according to the current label, furthermore comprising a pH buffer, such that the pH of the spray tank composition is about 6 or higher and preferably about 9 or lower.

The inventors have surprisingly found that in spray tank compositions with a suitable pH, daminozide compositions comprise much lower UDMH concentrations upon storage for 1 or 2 days. Without being bound by theory, it is thought that a suitable pH inhibits the formation of UDMH through the inhibition of acid catalyzed hydrolysis of daminozide.

It has further been found that the ratio of pH buffer to daminozide is preferably about 1:1 to about 1:5, more preferably between about 1:1.2 to about 1:3.

High pH or too high levels of pH buffer can lead to leaf burn, which is harmful to the plants, and might also result in base catalyzed hydrolysis or oxidation of daminozide. The spray tank composition of the invention has a pH of about 6 or higher, preferably about 6.5 or higher, and more preferably about 7 or higher. The spray tank composition of the invention preferably has a pH of about 9 or lower, more preferably about 8 or lower.

The spray tank composition of the invention comprises preferably more than 0.05% by weight, and preferably no more than 0.35 wt%, of buffer. Low pH or too low levels of pH buffer can result in acid catalyzed hydrolysis or be ineffective respectively.

A suitable pH buffer preferably comprises a weak base and its conjugate acid.

Suitable pH buffers can be selected from the group of phosphates, carbonates, borates, or a mixture thereof. Preferred metal ions include potassium or sodium. Further preferred cations include ammonium. It is preferable to use buffers that can also be used as plant nutrients, or can be broken down, for example by soil bacteria, to plant nutrient compounds. It is further preferable to use compounds that are not toxic to humans at the concentrations used. It is also preferable to use a buffer compound that readily dissolves in water.

Another aspect of the invention is aimed at providing a daminozide concentrate composition, which is suitable for mixing into a spraying tank.

A concentrate composition can comprise both the daminozide compound and the buffer compound and be in a liquid form, such as an oil dispersion, ionic liquid or the like, or it can be in a solid form, such as a powder, granules, or the like.

In an alternative embodiment, the concentrate composition is provided as a kit of parts, comprising daminozide in one concentrated form, and the proper amount of buffer as a second concentrated form. The kit of parts furthermore comprises instructions to handle the components of the kit to provide the spray tank solution.

Both embodiments allow the use of daminozide in an improved safe manner. The concentrate composition comprising both the buffer and daminozide can only be used in the correct amounts. The kits of parts allow optimized packaging for both the daminozide and the buffer component.

The concentrate composition or kit of parts preferably contains an amount of pH buffer to daminozide in a ratio of 1:1 to 1:5 by dry weight. The concentrate or kit of parts further preferably contains 10-50% by dry weight of buffer of the total solid content.

Finally disclosed herein are packaged products containing daminozide for minimizing the operators' exposure to UDMH or substances while handling daminozide. Such packaged products comprise daminozide in plastic containers, precluding release of UDMH before opening the container and dissolving the content of such container in water.

### Detailed description of the invention

The invention provides a spray tank composition comprising daminozide and a pH buffer. The pH of the spray tank composition is about 6 or higher, more preferably about 7 or higher. Preferably, the pH of the spray tank composition is about 9 or lower, more preferably about 8 or lower.

The spray tank composition is water based, for the hydration of plants, and due to ease of access to water in most places, which saves costs of transport, storage and material.

Preferably, the ratio of buffer salt to daminozide is about 1 to about 1 to about 1 to about 5, wherein the ratio is defined as the weight of buffer salt to the weight of daminozide. More preferably the ratio of buffer salt to daminozide between about 1:1.2 to about 1:3. Higher concentrations of buffer can result in leaf burn and can have adverse effects on the soil. Higher concentrations of buffer are also less desirable in due to material costs, storage and transport. Lower concentrations of buffer are less effective.

A suitable pH buffer generally comprises a weak base and its conjugate acid. A suitable pH buffer can be chosen from any buffer known in the art. Preferably, the buffer is selected from the group of phosphates, carbonates, borates or a mixture thereof. Preferably, the pH buffer comprises a potassium, sodium or ammonium salt. Examples of suitable pH buffers include KH₂PO₄ in combination with NaOH, KH₂PO₄ with K₂HPO₄ and NaHCO₃ with K₂CO₃. In a preferred embodiment, the buffer is provided as sodium, potassium or ammonium carbonate. Because daminozide is an acid, it can be sufficient to have for example only disodiumcarbonate as buffer component, which will then transfer into HCO₃⁻/CO₃²⁻ buffer when dissolved with the daminozide.

In an embodiment of the invention, the concentration of daminozide in the spraying tank composition is between about 1 g/L to about 6 g/L. More preferably, the concentration of daminozide is between about 1.5 g/L to about 5 g/L such as for example about 2.5 g/L. Higher daminozide concentrations can result in more UDMH formation and higher costs. However, levels up to 18 g/L are allowed according to the label, and are therefore comprised in the present invention.

The invention provides a spray tank composition wherein the concentration of UDMH after 24 hours is about 1 ppm or less. Preferably the concentration of UDMH is about 400 ppb or less, more preferably 100 ppb or less, even more preferably 50 ppb. In a further preferred embodiment the increase of UDMH is about 100 ppb or less, even more preferably about 50 ppb or less, most preferably about 20 ppb or less in 24 hr.

Another aspect of the invention is directed to a concentrate composition comprising daminozide and a pH buffer, the composition being suitable to be diluted in a spray tank to create a spray tank composition according to the invention, which is suitable for spraying plants.

A concentrate composition can be made by providing suitably pure daminozide and a pH buffer in powder form and mixing these. Alternatively, the concentrate composition can be formulated in liquid form or in the form of tablets or granules. Preferably, if water is needed during preparation, such as when extruding granules, this water buffered to a pH of about 6.5 or higher to prevent UDMH formation during extrusion.

The concentrate composition, upon contact with water, dissolves or disperses readily, and forms a solution, suspension or emulsion.

The concentrate composition according to the invention preferably comprises about 10 wt.% of daminozide or more, and preferably about 84 wt.% or less. The concentrate composition preferably comprises about 10 wt.% of buffer or more, and preferably comprises about 50 wt.% by weight of buffer or less. In one embodiment, the composition essentially consists of daminozide and buffer.

In a preferable embodiment, the concentrate composition is provided as a solid.

More preferably, the solid composition is provided as water-soluble or water-dispersible granules. In this type of formulation, the active ingredient is formulated as granular particles of preferably 100 to 300 micron size. To prepare the water-soluble or dispersible granules for spray application, they are completely soluble or dispersible in water upon agitation. Many different water- soluble or water-dispersible granular formulations are known for agricultural chemicals. For example, EP 0 252 897 and U.S. Pat. No. 4,936,901 disclose encapsulated plant growth regulators in water dispersible granular formulations, U.S. Pat. No. 6,387,388 B1 and U.S. Patent Application Publication US 2002/0114821 A1 disclose an extruded water-soluble insecticide, and U.S. Pat. No. 5,622,658 discloses an extrudable composition for preparing water-dispersible granules. Water-soluble or water-dispersible granules generally comprise water-soluble or water-dispersible components such as lactose, sodium carbonate. Water-soluble or water-dispersible granules generally also comprises additives such as surfactants.

Generally, water-soluble or water-dispersible granules can be prepared by first providing the components, and comminuting or milling these to provide powders. This is then followed by dry mixing the powders, after which the mixture can be wetted with water until a paste suitable for extrusion forms. The paste can then be extruded and the resultant granules dried, for example in a fluid bed dryer. In a preferable embodiment, the extrusion water is buffered to a suitable pH.

In a preferable embodiment, the concentrate composition is provided as a powder. A suitable powder formulation is one which, when mixed with water, dissolves readily in water and forms a solution. Once the solution is formed, no further mixing or agitation of the tank-mix is required. Such wettable powder formulation preferably is a dry, finely ground formulation. In this formulation, the active ingredient may be combined with a finely ground dry carrier along with other ingredients that enhance the ability of the powder to be suspended in water. Suitable carriers include microcrystalline cellulose, lactose monohydrate and mineral clay. Upon mixing the wettable powder with water, daminozide and the buffer dissolves, while the carrier may form a suspension. The solution/suspension is then applied by a spray technique.

In a preferable embodiment, the concentrate composition is provided in tablet form. Tablet formulations may be effervescent, which dissolve in water over a period of two to ten minutes depending upon the type and size of the tablet. Tablets generally deliver only between 0.2 - 2 gram of active ingredient per tablet of 10 gram.

In a preferable embodiment, the concentrate composition is provided as a liquid.

Preferably, a liquid composition is essentially water-free. Water-free means that the concentrate composition comprises less than 5% by weight of water. More preferably, the concentrate composition comprises about 3 wt.% water or less, more preferably about 1 wt.% water or less, most preferably about 0.5 wt% or less.

A liquid composition can be in the form of a solution, emulsion or suspension. Examples of suitable liquid formulations are oil dispersions, liquid concentrates, and ionic liquids. The liquid of the liquid composition can be for example an oil, an ester, an alcohol or an ether.

Oil dispersions generally comprise an organic hydrophobic carrier in which at least one of the daminozide or the pH buffer is dispersed. Preferably, oil dispersions form an emulsion upon mixing with water. Preferably, the organic carrier is an oil, or a derivative thereof. Preferably, the carrier material is a vegetable oil or a derivative thereof with a melting point of about 10 °C or lower, preferably of about 0 °C or lower. Suitable vegetable oils are e.g. palm oil, soybean oil, rapeseed oil, sunflower oil, cotton seed oil, palm kernel oil, coconut oil, linseed oil, olive oil, peanut oil and the like. Suitable derivatives of vegetable oils include alkyl esters of the fatty acids, like for example C1-C6-alkyl esters, like for example bio-diesel, or methyl esters of rape seed oil and the like.

The liquid concentrate formulations comprise daminozide and a pH buffer. All the components in the liquid concentrate may be dissolved, forming a solution. In this embodiment, the solvent is preferably a polar solvent, such as alcohols, or ethers. The solvent can be a short chain alcohol, such as methanol, ethanol, butanol, propanol or isopropyl alcohol. The solvent can be an aprotic solvent, such as ethyl acetate, diethyl ether, acetone, t-butyl-methyl ether, DMSO and the like.

Alternatively, one or more component may only partially, or not at all, dissolve, forming a dispersion. The dispersion medium may be any solvent. Preferably, the dispersion medium is an organic solvent such as an alcohol or ester.

Alternatively, the liquid concentrate is an emulsion wherein daminozide and/or pH buffer are dissolved in at least one phase. One of the phases may be a polar solvent such as alcohols, or ethers. The solvent can be a short chain alcohol, such as methanol, ethanol, butanol, propanol or isopropyl alcohol. The solvent can be an aprotic solvent, such as diethyl ether. One of the phases may be an organic solvent, such as a vegetable oil or derivative thereof. Preferably, the organic solvent is a vegetable oil or a derivative thereof with a melting point of about 10 °C or lower, preferably of about 0 °C or lower. Suitable vegetable oils are e.g. palm oil, soybean oil, rapeseed oil, sunflower oil, cotton seed oil, palm kernel oil, coconut oil, linseed oil, olive oil, peanut oil and the like. Suitable derivatives of vegetable oils include alkyl esters of the fatty acids, like for example C1-C6-alkyl esters, like for example bio-diesel, or methyl esters of rape seed oil and the like. Even though vegetable oils are preferred for environmental reasons, other organic fluids can be used, like hydrocarbon oils such as toluene, naphthalene, octane, decaline, or paraffin oils such as C15-C30 hydrocarbons are suitable, optionally in admixture with lower carbon number alkanes, or organic base solvents such as amines, imines, urea, amides, imides and/or derivatives thereof.

Other suitable solvents comprise ethers, like t-butyl-methyl ether, esters such as t-butyl-acetate, butyl-acetate, DMSO and the like.

Additives may be added to the concentrate composition. Additives can include one or more of: surfactants, anti-caking agents, antioxidants, antifoams, micronutrients, further growth regulator, fungicide, biocide, or another additive known in the art such as safeners, colorants and the like.

Surfactants can include for example emulsifiers and/or solubilizers. Emulsifiers are commonly used in a variety of liquid compositions, such as solutions, emulsions, suspensions, oil dispersions, ionic liquids and the like.

As indicated above, the concentrate according to the invention may further contain an emulsifier. The emulsifier may aid in the concentrate of the growth regulator on dilution in water and the emulsifier may aid in the emulsification of the carrier fluid in the water phase. Also, the emulsifier may promote the uptake of the active by the plant. Suitable emulsifiers may be anionic, cationic or non-ionic emulsifiers and are well known in the art.

Typical emulsifiers, or surface-active agents, are alkyl sulphate salts, such as diethanol ammoniumlaurate sulphate, alkylarylsulphonate salts, such as like calcium dodecyl benzene sulphonate, alkylphenol-alkylene oxide addition products, such as nonylphenol-C18 ethoxylate; alcohol-alkylene oxide addition products, such as tridecyl alcohol-C16 ethoxylate; ethoxylated fatty acids such as castor oil ethoxylate (EO 25 or 40), soaps such as sodium stearate; alkylnaphthalene-sulphonate salts such as sodium dibutylnaphthalenesulphonate; dialkylesters of sulphosuccinate salts, such as sodium di(2-ethylhexyl) sulpho-succinate; sorbitol esters such as sorbitol oleate; quaternary amines, such as lauryl trimethylammonium chloride; polyethylene glycol esters of fatty acids, such as polyethyleneglycol stearate; block-copolymers of ethyleneoxide and propylenenoxide; salts of mono and dialkyl phosphate esters; polyamine-fatty acid condensates; random polyester condensates; lecitine or modified lecitines; mono- or di-glycerides and the like.

Preferably, the emulsifier is an alkoxylated sugar, preferably esterified with fatty acids or sugar, esterified with fatty acids. Suitable sugars, or polyols, are pentaeritritol, sorbitol, maltose, trimethylolpropane, ethyleneglycol and the like. The 30 alkoxygroups preferably are ethyloxy or propyloxy, and most preferably at least comprise at least 3 ethoxy groups, preferably at least 5 ethoxy groups. Esterification with fatty acids may comprise esterification with C12-C24 fatty acids, wherein the fatty acids may be unsaturated, and preferably are monounsaturated.

The concentrate according to the present invention may further comprise a fungicide.

Suitable further compounds that can be added are jasmonates or phoshonic acid, which strengthen the defence mechanisms of the plants. Suitable jasmonates include methyl jasmonate, propyldihydrojasmoante and jasmonic acid.

Suitable further compounds that can be added are metal compounds, such as for example zinc, manganese, selenium, iron, copper, boron, molybdenum and magnesium, mixtures of these, and the like. The metal ions can be used as chelates or salts, like for example EDTA chelates, citrate salts, proteinates or otherwise in a form that the metals are absorbed by the plant leaves.

The concentrate according the invention may further include an anti-oxidant, such as for example vitamin-E, butylated hydroxyanisole, Vulkanox BHT (2,6-di-tert.-butyl-p-cresol) or butylhydroxytoluene.

The concentrate of the invention may further include an antifoam such as silicone based oils, magnesiumstearate or octanol.

The concentrate according the invention may further include a biocide, like a bactericide and/or algicide, like for example isothiazolin-3 derivatives, like benzyl-isothiazolin, n-octyl isothiazolinone, chloro-methyl and methyl isothiazolinone; bromo-nitro-propane-diol; ethylenedioxydimethanol; (3-(3,4-dichlorophenyl)-1,1-dimethylurea; iodo-propynyl butyl carbamate; N-trichloromethylthiophtalimide; Zinc Pyrithione; dichlorophen, streptomycin, coppersulphate, or sorbate.

In a preferred embodiment, the concentrate composition according to the invention is shelf-stable for at least 2 years, and comprises less than 30 ppm UDMH to daminozide during this time. In a more preferred embodiment, the concentrate composition comprises about 20 ppm UDMH to daminozide or lower during this time, even more preferably about 15 ppm UDMH to daminozide or lower.

The concentrate can also be supplied as a kit of parts, in which in one compartment the daminozide concentrate is delivered, and in another compartment the buffer component. A kit of parts has the advantage of precluding potentially difficult formulation research, and allowing optimal packaging of the individual components. Furthermore, the kit-of-parts largely diminish potential mistakes in supplying the different components to the spray tank.

In a preferred embodiment, the concentrate composition, or kit-of-part composition, is supplied as a packaged product designed to minimize operators' exposure to UDMH or substances while handling daminozide. Generally, this can be achieved by providing plastic packaging, which precludes release of UDMH before opening the packaging and dissolving or dispersing the content of such packaging in water. Preferably, the plastic container dissolves or degrades upon contact with water. Dissolution or degradation of the packaging allows the contents to easily dissolve or disperse, while minimizing operators' exposure to the contents.

In an embodiment, the plastic packaging is a polyethene or polyester film. In a further preferred embodiment, the plastic packaging degrades or dissolves upon contact with water. Plastics suitable for dissolution in water include polyvinyl alcohol.

The concentrate composition, or kit-of-part composition of the invention can be diluted to form a spray tank composition of the invention. The concentrate composition is diluted with water. The dilution is performed by providing an appropriate amount of concentrate and an appropriate amount of water.

In a preferred embodiment, the dilution is performed such that the concentration of daminozide in the final dilution composition is about 1 g/L to about 6 g/L, more preferably about 1.5 g/L to 5 g/L like for example about 2.5 g/L, although up to 18 g/L can be possible.

One of the ways to use daminozide is to prepare a semi-concentrate of 200-400 g/L, like about 300 g/L, and dynamically further dilute that semi-concentrate in line. This is comprised with the language of diluting the concentrate.

The spray tank composition obtained by diluting the concentrate composition of the invention comprises UDMH in a concentration of about 1 ppm or less after 24 hr. Preferably, the concentration of UDMH after 24 hr is about 400 ppb or lower, more preferably 100 ppb or lower, and even more preferably about 50 ppb or lower.

During dilution, the spray tank mixture is preferably agitated to promote good mixing.

Suitable dilutions can comprise about 96 wt.% water or more and about 4 wt.% of the concentrate composition or less. Preferably the concentrate composition is diluted with water in a range of about 1:50 to 1:1000 (in wt/wt, based on dry matter daminozide /water), preferably 1:150 to 1:1000.

Other additives may also be added to the spray tank and diluted. Suitable additives are as referred to above. Hence, additives or additional active components, to be used in combination with daminozide can be added to the concentrate, but can also be added directly to the water phase. Suitable additional active compounds include a further growth regulator, a fungicide, biostimulants (such as micronutrients and macronutrients, e.g. a metal compound, a jasmonate), insecticides and/or acaricides.

Suitable additional compounds include plant growth regulators, such as S-ABA, one or more gibberellins, gibberellin derivatives, chlormequat, ethephon, triazoles with growth regulation activity like metconazole, tebuconazole and paclobutrazol and the like, an auxin and/or cytokinin.

Suitable gibberellins include gibberellic acid (GA₃), GA₄, GA₇ and others. More generally, the term "gibberellins" encompasses diterpenoids having a tetracyclic ring system. In terms of their nomenclature, gibberellins were numbered in order of their discovery, so the numbering does not signify the position of one particular substituent. The compounds have nineteen or twenty carbons, and four or five ring systems. Some examples of gibberellins include GA₃, commonly referred to as gibberellic acid; and GA₄ and GA₇, which are immediate precursors of GA₃. There are approximately 130 gibberellins described today, and these are encompassed by the general term "gibberellin". Gibberelin derivatives include for example 16,17-dihydro gibberellins.

Suitable auxins include natural or synthetic chemicals that behave like the naturally occurring auxins produced by plant enzyme systems, and the term "auxin" and "auxins" as used herein refers to such compounds in natural and synthetic form. Indoleacetic acids, indol-3-butyric acid (3-BA); naphthaleneacetamide; 2 methyl-1-naphthaleneacetic acid and 2-methyl-1-naphthylacetamide have hormonal activity and may be substituted for the naturally occurring auxins. It may be useful to have metal ions present with the auxins, such as for example zinc or manganese. In preferred embodiments, the auxin employed is selected from the group consisting of 3-indolebutyric acid, 3-indoleacetic acid, 1-naphthylacetic acid, 3-indolebutyric acid, and salts and esters thereof. Preferably, the metal ions required for a good activity are supplied together with the auxin.

Suitable cytokinins are a class of plant regulation substances (phytohormones) that promote cell division, or cytokinesis, in plant roots and shoots. There are two types of cytokinins: adenine-type cytokinins represented by kinetin, zeatin, and 6-benzylaminopurine (also referred to as BAP, 6-BAP, or 6-benzyladenine), and phenylurea-type cytokinins like diphenylurea and thidiazuron (TDZ). In preferred embodiments the cytokinin is selected from the group consisting of kinetin (synthetic or derived from seaweed), 6-BAP, 1-(2-chloropyridin-4-yl)-3-phenylurea (CPPU), and TDZ.

Suitable additional compounds include specific anti powdery mildew fungicides such as morfolines like fenpropidine and fenpropimorf, metrafenone, cyflufenamide, quinoxyfen and proquinazid; SBI fungicides like triazoles like epoxyconazol, prothioconazole, metconazole, tebuconazole, difenoconazole, penconazole, propiconazole, triticonazole etc; Strobilurines (Qol fungicides) like azoxystrobin, coumoxystrobin, dimoxystrobin, enoxastrobin, famoxadone, fenamidone, fenaminostrobin, fluoxastrobin, flufenoxystrobin, kresoxim-methyl, metominostrobin, orysastrobin, pyraoxystrobin picoxystrobin, pyraclostrobin, pyrametastrobin, pyribencarb, triclopyricarb trifloxystrobin and SDHI like fungicides like benodanil, bixafen, boscalid, carboxin, fenfuram, fluopyram, flutolanil, fluxapyroxad, furametpyr, isopyrazam, mepronil, oxycarboxin, penflufen, penthiopyrad, sedaxane and thifluzamid; mancozeb, bupirimate, captan, chlorothalonil, copper-based products, cyazofamid, cyprodinil, diethofencarbe, dimethomorphe, dithianon, dodemorph, fenamidone, fenhexamid, fenpropidine, fenpyrazamine, fluazinam, fludioxonil, fluopyram, fosetyl, imazalil, isopyrazam, kresoxim-methyl, mandipropamid, mepanipyrim, metalaxyl-M, metiram, myclobutanil, potassium hydrogenocarbonate, potassium phosphate, propamocarbe, quinoxyfen, Sulphur, thiophanate methyl, triadimenol.

Suitable further compounds that can be added are biostimulants. Biostimulants include for example micronutrients and macronutrients, optionally applied as a foliar fertilizer, jasmonates and salicylic acid.

Suitable further compounds that can be added are jasmonates or phosphonic acid, which strengthen the defence mechanisms of the plants. Suitable jasmonates include methyl jasmonate, propyldihydrojasmonate and jasmonic acid. A further suitable compound for strengthening plant resistance comprises acibenzolar-S-methyl.

Suitable further compounds that can be added are metal compounds, such as for example zinc, manganese, selenium, iron, copper, boron, molybdenum, and magnesium, mixtures of these and the like. The metal ions can be used as chelates or salts, like for example EDTA chelates, citrate salts, proteinates or otherwise in a form that the metals are absorbed by the plant leaf.

Suitable further compounds include insecticides, such as azadirachtin, esfenvalerat, thiamethoxam, formetanate, pirimicarb, pymetrozine, spirotetramat, abamectin, rape seed oil, paraffin oil, pyrethrins, bifenazate, hexythiazox, acequinocyl, clofentezine, etoxazole, cyflumetofen, spirodiclofen, maltodextrin, acequinocyl, fenpyroximate, milbemectin, acetamiprid, lambda-cyhalothrin, dimethoate, deltamethrin, thiacloprid, sulfoxaflor, orange oil, imidacloprid, cypermethrin and alpha-cypermethrin, flonicamid, cyantraniliprole, methiocarb, Spinosad, indoxacarb, etofenprox.

Suitable further compounds include acaricides. These can be any of the ones known in the art.

Preferably, the spraying tank mixture composition is used within 48 hours of diluting the concentrate, and even more preferably within 24 hr and most preferably within 10 hr (i.e. the same day). Longer waiting times can have adverse effects on the mixture in the tank, resulting for example in residue, product degradation, etc.

A suitable amount of spraying liquid is applied onto the plants. This may be done via any method known in the art, such as tank spraying, boom spraying, drip irrigation, sprinkler systems and the like.

The spray tank composition is applied on the plants such that an effective amount of daminozide is applied, preferably such that at least 50 g/ha and at most 12.5 kg/ha is applied. Preferred amounts are between about 0.5 kg/ha and 5 kg/ha. Generally, the maximum application rate is 25 kg/ha per crop cycle.

Preferably, the spray tank composition is applied to the foliage of the plants.

The spray tank composition is generally sprayed at a volume of about 50 L/ha to about 1500 L/ha, preferably about 500 L/ha to about 1000 L/ha.

Crops that are suitable for treatment with a spray tank mixture according to the invention include ornamental crops, more preferably crops such as Ageratum, Aster, Azealea, Begonia, Brassica, Browallia, Calibrachoa, Calendula, Celosia, Centaurea, Chrysanthemum, Coleus, Cosmos, Crossandra, Dahlia, Delphinium, Dianthus, Dicentra, Dusty Miller, Exacum, Ficus, Gardenia, Gerbera, Gomphrena, Helianthus, Hibiscus, Hydrangea, Kalanchoe, Lisianthus, Lobelia, Marigold, Nemesia, Petunia, Philodendron, Phlox, Poinsettia, Pothos, Radermachera, Salvia, Schefflera, Sunflowers, Syngonium, Tagetes, Verbena, Violets, Vinca and Zinnia.

### Examples

### Example 1

Tank mix media (buffered to pH 4.0, 7.0 and 9.0) were prepared in both deionized water and tap water (of defined composition). Tap water and deionized water were also included as controls. The concentration of UDMH was measured after 1, 2, 4 and 24 hours of storage at 20°C.

The test samples all had a volume of 250 mL, and contained 1.1 g of dissolved daminozide. The buffer salts all included 0.1 N NaOH. To obtain a pH of 4.04, 0.1M KH phth. (phthalic acid) was used, for pH=7.07 0.1M KH₂PO₄, for pH=9.04 0.1M boric acid.

Results are shown in Table 1 below. It can be seen that at a pH of 7 and a pH of 9, UDMH concentrations of max 50 ppb were observed after 24 hr. After 24 hours, just 0.89 µg/mL UDMH had formed in water buffered to pH 4. This amount is still less than 0.02% of the daminozide concentration (4.4 g/L). Yet, safety concerns arise with such concentrations. Such concerns are even higher with the use of daminozide in unbuffered water, see the poor performance of daminozide unbuffered water after 4 hr only.

**Table 1 UDMH concentration in buffered compositions, tap water and deionized water after 1, 2, 4 and 24 hrs**

| | UDMH levels, µg/mL | | | |
|---|---|---|---|---|
| Storage time, hr. @ 20°C | 1 | 2 | 4 | 24 |
| pH=4.04 | 0.06 | 0.10 | 0.17 | 0.89 |
| pH=7.07 | 0.04 | 0.04 | 0.04 | 0.05 |
| pH=9.04 | 0.04 | 0.04 | 0.04 | 0.04 |
| Tap water (CIPAC D); about pH 4 | | | 0.32 | |
| Deionized water; about pH 4 | | | 0.28 | |

### Example 2

Concentrate compositions according to the invention were made according to Table 2. To assess storage stability, the samples were tested immediately after preparation, and after being stored for two weeks in 54°C.

**Table 2 Composition of daminozide concentrate granules according to the invention**

| Batch Reference | ***Granulate A*** | ***Granulate B*** | ***Granulate C*** |
|---|---|---|---|
| Component | %w/w | | |
| Daminozide technical (99.9%) | 42.54 | 42.54 | 42.54 |
| Sodium carbonate | 21.25 | 21.75 | 22.25 |
| Potassium carbonate | - | - | - |
| Morwet D425 | 2 | 2 | 2 |
| Morwet IP | 1 | 1 | 1 |
| Lactose Monohydrate | 33.25 | 32.75 | 32.25 |

The daminozide concentration of the granules was measured after preparation, and after storage for 2 weeks at 54°C, see Table 3. It can be observed that the daminozide concentration in %w/w seemed to increase. It is suspected that this was due to water loss. The daminozide concentration was measured via a reverse phase HPLC method using a C18 column.

**Table 3 Concentration of daminozide in concentrate granules**

| Storage period | Initial | 2 weeks at 54°C | |
|---|---|---|---|
| | Daminozide concentration | | |
| | %w/w | %w/w | % of initial |
| Granulate A | 40.91 | 41.64 | 101.8 |
| Granulate B | 41.13 | 41.82 | 101.7 |
| Granulate C | 41.05 | 41.78 | 101.7 |

The appearance of the granules was assessed after preparation and after storage. See Table 4.

**Table 4 Appearance before and after storage at 54°C for 2 weeks, OPPTS 830.6303 method**

| Storage period | Initial | 2 weeks at 54°C |
|---|---|---|
| Batch reference | Description of appearance | |
| Granulate A | Off-white, mobile granules. | Off-white granules, mobile after 1 inversion of the container |
| Granulate B | Off-white, mobile granules. | Off-white granules, mobile after 1 inversion of the container |
| Granulate C | Off-white, mobile granules. | Off-white granules, mobile after 1 inversion of the container |

Tables 5-7 detail wetting time, foam persistence and dissolution degree and solution stability behaviour before and after accelerated storage. The granulates proved acceptable after storage.

**Table 5 Wetting time before and after storage at 54°C for two weeks, CIPAC MT 53.3.1 method**

| Storage period | Initial | 2 weeks at 54°C |
|---|---|---|
| Batch reference | Wetting time (seconds) | |
| Granulate A | 1 | 1 |
| Granulate B | 1 | 1 |
| Granulate C | 1 | 1 |

**Table 6 Foam persistence, 2.4% w/v rate in CIPAC D water, CIPAC MT 47.1 method**

| Storage Period | Initial | | | | 2 weeks at 54°C | | | |
|---|---|---|---|---|---|---|---|---|
| | Volume of foam (ml) after | | | | | | | |
| Batch reference | 10 s | 1 min | 3 mins | 12 mins | 10s | 1 min | 3 mins | 12 mins |
| Granulate A | 42 | 2 | <1 | 0 | 56 | 30 | 5 | 0 |
| Granulate B | 48 | 18 | <1 | 0 | 52 | 21 | 8 | 0 |
| Granulate C | 37 | <1 | 0 | 0 | 50 | 15 | 5 | 0 |

**Table 7 Dissolution degree and solution stability, 2.4% w/v use rate in CIPAC D water, CIPAC MT 179 method**

| Storage period | Initial | | 2 weeks at 54°C | |
|---|---|---|---|---|
| Batch Reference | Residue after | | | |
| | 5 minutes | 24 hours | 5 minutes | 24 hours |
| Granulate A | None | None | None | None |
| Granulate B | None | None | None | None |
| Granulate C | None | None | None | None |

### Example 3:

Concentrate compositions according to Table 8 were made.

The daminozide was passed through a Retsch SR300 hammer mill, fitted with 360° 1.0 mm screen. The hammer milled daminozide was then passed through an Atritor M4 microniser using 6 bar air. Sodium carbonate was passed through the same hammer mill. The micronized daminozide and hammer milled sodium carbonate were dry mixed until a homogeneous powder formed.

To prepare granulate 1, tap water was added to the powder base 1, and the resultant paste extruded through a 1 mm screen. The granules were fluid bed dried for 30 minutes at 50°C.

To prepare granulate 2, a 0.21 wt.% sodium carbonate monohydrate solution in water was used to wet the powder. The extrusion was then performed as for granulate 1.

**Table 8**

| | Powder base 1 | Granulate 1 | Powder base 2 | Granulate 2 |
|---|---|---|---|---|
| Daminozide (99.9% pure) | 42.5 wt.% | 42.5 wt.% | 42.5 wt.% | 42.5 wt.% |
| Sodium carbonate monohydrate | 24.75 wt.% | 24.75 wt.% | 24.73 wt.% | 24.73 wt.% |
| Morwet D425 | 2.0 wt.% | 2.0 wt.% | 2.0 wt.% | 2.0 wt.% |
| Morwet IP | 1.0 wt.% | 1.0 wt.% | 1.0 wt.% | 1.0 wt.% |
| Lactose monohydrate | 29.75 wt.% | 29.75 wt.% | 29.75 wt.% | 29.75 wt.% |

The compositions were added to water at 4 g/L. The pH of the dilutions remained within the 7.0 - 8.0 range over 24 hours. The UDMH concentration was determined by absorption at 260 nm. See Table 9 for results:

**Table 9: UDMH concentration in µg/ml**

| Sample | Immediately after dilution | 4 hours after dilution |
|---|---|---|
| Powder base 1 | 0.018 | 0.026 |
| Granulate 1 | 0.017 | 0.021 |
| Powder base 2 | 0.021 | 0.023 |
| Granulate 2 | 0.017 | 0.023 |

The UDMH concentration did not vary significantly after 4 hours.

### Example 4:

Greenhouse trials were carried out on cut chrysanthemum in the Netherlands. Spray tank compositions were made according to Table 10. Dazide Enhance is a commercially available powder comprising 85 wt.% daminozide. The spray rate was 1000 1/ha. Application was performed on 13^{th} May, 20^{th} May and 28^{th} May 2019 and assessment was carried out on 20^{th} May, 28^{th} May 5^{th} and 19^{th} June 2019.

**Table 10**

| | Daminozide g/l | Plant height in cm (reduction%) | | | |
|---|---|---|---|---|---|
| | | May 20 | May 28 | June 5 | June 19 |
| Water only | 0 | 74.7 a | 94.5 a | 98.3 a | 105.0 a |
| Comp Ex: Dazide Enhance 5 g/l | 4.25 | 63.9 (14.5%) b | 79.2 (16.2%) b | 86.0 (12.5%) b | 88.0 (16.1%) b |
| Comp. Ex.: Dazide Enhance 10 g/l | 8.50 | 58.0 (22.4%) e | 75.4 (20.2%) e | 76.2 (22.5%) e | 83.1 (20.8%) f |
| Dazide Enhance 5 g/l + buffer to pH 7 | 4.25 | 63.9 (14.4%) b | 77.2 (18.3%) d | 85.1 (13.4%) c | 86.6 (17.5%) c |
| Granulate C 6 g/l | 2.55 | 62.6 (16.2%) d | 78.1 (17.4%) c | 85.1 (13.4%) c | 86.0 (18.1%) d |
| Granulate C 10 g/l | 4.25 | 63.1 (15.5%) c | 75.2 (20.5%) e | 79.1 (19.5%) d | 85.1 (19.0%) e |
| Granulate C 20 g/l | 8.50 | 58.0 (22.4%) e | 73.0 (22.8%) f | 75.1 (23.6%) f | 82.0 (21.9%) g |

Notably, the compositions according to the invention showed better efficacy than the comparable examples of the same concentration.

### Example 5:

Tank spray solutions were made by dissolving daminozide in buffered water (pH was 7 or 8), comparative examples were provided by dissolving in tap water and buffered water of pH 6. Daminozide was provided in the form of commercially available product Dazide Enhance, comprising 85 wt.% daminozide.

The spray tank compositions were sprayed on chrysanthemum at a rate of 1000 l/ha. The application was carried out on the 11^{th} of February and assessment carried out on 4^{th} of March 2019.

The average height was measured and compared to an untreated control. It is shown that the efficacy of daminozide is maintained at various pH using various amounts of buffer. Table 11 shows the concentration of buffer for the various pHs, Table 12 details the results of the height experiment. It can be seen that the use of buffer did not have an adverse effect on the efficacy of daminozide. Some phytotoxicity was observed with the use of pH buffer 8 a week after application, however effect was not visible anymore on the day of assessment.

**Table 11**

| Target pH | KH2PO4 added | Na2HPO4 added |
|---|---|---|
| 6 | 2,1 g | 0,67 g |
| 7 | 0,94 g | 3,27 g |
| 8 | 0,14 g | 5,08 g |

**Table 12**

| | Average height | % vs UTC | Efficacy | 5% certainty |
|---|---|---|---|---|
| Untreated control | 97.3 | 100 | 0 | A |
| Dazide Enhance 2 g/l tap water | 82.2 | 84.5 | 15.5 | B |
| Dazide Enhance 2 g/l pH 6 | 82.1 | 84.4 | 15.6 | B |
| Dazide Enhance 2 g/l pH 7 | 82 | 84.3 | 15.7 | B |
| Dazide Enhance 2 g/l pH 8 | 81.9 | 84.2 | 15.8 | B |

### Example 6:

Greenhouse trials were carried out on petunia in the Netherlands. Spray tank compositions were made according to Table 13. Dazide Enhance is a commercially available powder comprising 85 wt.% daminozide. The spray rate was 1000 l/ha. Application was performed on 10^{th} June, 14^{th} June, 19^{th} June, 24^{th} June and 29^{th} June 2019 and assessment was carried out on 19^{th} June, 24^{th} June, 29^{th} June and 5^{th} July 2019.

**Table 13**

| | Daminozide g/l | Plant height/cm (reduction (%) | | | |
|---|---|---|---|---|---|
| | | 19^{th} June | 24^{th} June | 29^{th} June | 5^{th} July |
| Water Only | 0 | 6.9 a | 9.7 a | 11.3 a | 14.0 a |
| Comp. Ex.: Dazide Enhance 5 g/l | 4.25 | 3.7 (46%) c | 5.5 (43%) c | 7.5 (34%) b | 8.7 (38%) c |
| Comp. Ex.: Dazide Enhance 10 g/l | 8.50 | 2.8 (59%) d | 4.6 (53%) d | 5.1 (55%) e | 6.4 (55%) e |
| Dazide Enhance 5 g/l + buffer to pH 7 | 4.25 | 3.8 (45%) c | 4.7 (52%) d | 6.9 (38%) c | 8.5 (39%) c |
| Granulate C 6 g/l | 2.55 | 4.1 (40%) b | 6.4 (34%) b | 7.1 (37%) c | 9.0 (36%) b |
| Granulate C 10 g/l | 4.25 | 3.5 (49%) c | 5.5 (44%) c | 7.6 (33%) b | 8.6 (39%) c |
| Granulate C 20 g/l | 8.50 | 3.5 (49%) c | 4.5 (54%) d | 5.4 (52%) d | 6.9 (51%) d |

It can be observed that all daminozide treatments were effective. Commercial value was also assessed during the final assessment. The water only plants were too big, and thus lost commercial value. The Comparative Example 10 g/l plants were too small and showed too few flowers. All other plants had acceptable commercial value.

## Claims

1. A spray tank composition comprising daminozide and a pH buffer, wherein the pH of the composition is higher than 6, preferably about 6.5 or more, and preferably lower than 9.

2. The composition according to claim 1 wherein the pH is between 6.5 and 8.

3. The composition according to any of claims 1 and 2, wherein the ratio of buffer salt to daminozide is 1:1 to 1:5, wherein the ratio is defined as the weight of buffer salt to the weight of daminozide.

4. The composition according to any of claims 1 to 3, wherein the ratio of buffer salt to daminozide is 1:1.2 to 1:3.

5. The composition according to any of claims 1-4, wherein the pH buffer comprises a weak base and its conjugate acid, preferably selected from the group of phosphates, carbonates, borates or a mixture thereof, more preferably a potassium or sodium salt.

6. The composition according to claim 5, wherein the pH buffer is selected from a sodium, potassium or ammonium carbonate.

7. The spray tank composition according to any of claims 1 - 6, wherein the concentration of daminozide is 1 - 6 g/L.

8. The spray tank composition according to any of claims 1-7, wherein the concentration of UDMH after 24 hours is about 400 ppb or less, more preferably 100 ppb or even more preferably about 50 ppb or less.

9. The spray tank composition according to any of claims 1 - 8, wherein the increase in UDMH concentration after 24 hours is about 100 ppb or less, preferably 50 ppb or less, or more preferably 20 ppb or less.

10. A concentrate composition comprising daminozide and a pH buffer, the composition being suitable to be diluted in a spray tank to create spray tank composition according to any one of claims 1 to 7, which is suitable for spraying plants.

11. The concentrate composition according to claim 10, wherein the composition is in solid form such as granules, powders, or in liquid form such as liquid concentrate, oil dispersion, ionic liquids.

12. The concentrate composition according to any of claims 10 - 11, wherein the concentrate is in solid form, and comprises 10 - 60 wt% daminozide, 10-40 wt% buffer, and 10-50% dissolvable carrier.

13. A method of treating plants, wherein a spray tank composition according to any one of claims 1 - 9 is prepared, preferably by dilution of a concentrate composition according to any one of claims 10 - 12, and wherein this spray tank composition is sprayed on plants within 48 hours, preferably within 24 hr and more preferably within 10 hr after preparation.

14. A kit-of-parts comprising daminozide and pH buffer salt, wherein the pH buffer salt form a pH buffer upon dilution of a pH higher than 6, preferably higher than 6.5, and preferably lower than 8, preferably wherein the weight ratio of pH buffer salt to daminozide is about 1:1 to about 1:5, more preferably about 1:1.2 to about 1:3.

15. The concentrate composition or kit-of-parts according to any of claims 10 - 12 or 14, wherein the concentrate composition or kit-of-parts is provided in a plastic container, preferably wherein the plastic dissolves or degrades upon contact with water.
